# EUROPEAN PATENT APPLICATION

(11) **EP 4 418 416 A1**
(43) Date of publication of application: **21.08.2024**
(21) Application number: 22881290.5
(22) Date of filing: 07.10.2022
(51) Int. Cl.: H01M 50/167, H01M 50/531, H01M 50/186, H01M 50/152, H01M 50/188, H01M 10/04, H01M 50/538

(54) **CYLINDRICAL SECONDARY BATTERY, AND MANUFACTURING METHOD FOR SECONDARY BATTERY**

(30) Priority: 15.10.2021 KR 20210137533
(71) Applicant: Samsung SDI Co., Ltd., Yongin-si, Gyeonggi-do 17084 (KR)
(72) Inventor: PARK, Gun Gue, Yongin-si, Gyeonggi-do 17084 (KR); CHUN, Byoung Min, Yongin-si, Gyeonggi-do 17084 (KR); MOON, Jin Young, Yongin-si, Gyeonggi-do 17084 (KR); KO, Sung Gwi, Yongin-si, Gyeonggi-do 17084 (KR)
(74) Representative: Gulde & Partner
(86) International application number: PCT/KR2022/015182
(87) International publication number: WO 2023/063662

(57) **Abstract**

The present invention relates to a cylindrical secondary battery comprising: a can having a circular floor part, a cylindrical side part of which one end is open, a beading part formed to be adjacent to one end of the side part, and a curling part formed by curling an end portion of the side part; an electrode assembly accommodated in the can; a first cap assembly coupled to the open end portion of the side part; a second cap assembly coupled to the floor part; a first electrode current collection plate arranged between the first electrode plate and the first cap assembly; and a second electrode current collection plate arranged between the second electrode plate and the second cap assembly, wherein, after the first cap assembly is mounted on the first electrode current collection plate, the beading part is formed in an area that presses the outer edge of the first electrode current collection plate, in a state in which a cap plate and the outer edge of the first electrode current collection plate are in contact with the side part.

## Description

### TECHNICAL FIELD

Embodiments of the present invention relate to a cylindrical secondary battery having an improved assembly structure of a cap assembly and a manufacturing method for a secondary battery.

### BACKGROUND ART

A secondary battery includes a cell including an electrode assembly including a positive electrode, a negative electrode, and a separator interposed between the positive electrode and the negative electrode, and an electrolyte solution impregnated in the electrode assembly.

Secondary batteries may be manufactured to have various external shapes, such as cylindrical, prismatic, or pouch-like shape, depending on uses thereof. Among them, a cylindrical secondary battery is configured such that an electrode assembly and an electrolyte are contained inside a cylindrical can, and one end of the can is sealed with a cap assembly. In general, a cylindrical secondary battery has a structure in which a lead tab or current collector plate is welded to a substrate of an electrode assembly and then electrically connected to the bottom surface of a can and a cap assembly. Here, after forming a beading part by deforming one end of the can, the cap assembly is seated on the beading part and is then welded to the lead tab or current collector plate. Then, a crimping part is formed at the end of the can to fix the cap assembly, thereby completing assembling of the cylindrical secondary battery.

The above-described manufacturing method for a general cylindrical secondary battery is problematic in that multiple welding and assembly processes are required in assembling a cap assembly, and thus is complex and increases costs and manufacturing time.

The above information disclosed in this Background section is only for enhancement of understanding of the background of the invention and therefore it may contain information that does not constitute prior art.

### DESCRIPTION OF EMBODIMENTS

### TECHNICAL PROBLEM

Embodiments of the present invention provide a cylindrical secondary battery having an improved assembly structure of a cap assembly and a manufacturing method for a secondary battery.

### SOLUTION TO PROBLEM

A cylindrical secondary battery according to an embodiment of the present invention may include: a can having a circular floor part, a cylindrical side part of which one end is open, a beading part formed to be adjacent to one end of the side part, and a curling part formed by curling an end portion of the side part; an electrode assembly accommodated in the can; a first cap assembly coupled to the open end portion of the side part; a second cap assembly coupled to the floor part; a first electrode current collection plate arranged between the first electrode plate and the first cap assembly; and a second electrode current collection plate arranged between the second electrode plate and the second cap assembly, wherein, after the first cap assembly is mounted on the first electrode current collection plate, the beading part is formed in an area that presses the outer edge of the first electrode current collection plate, in a state in which a cap plate and the outer edge of the first electrode current collection plate are in contact with the side part.

The first electrode plate may be a negative electrode plate in which the first electrode uncoated portion is disposed toward the open end of the side part, and the second electrode plate may be a positive electrode plate in which the second electrode uncoated portion is disposed toward the floor part.

The first cap assembly may further include a first gasket disposed between the curling part and the cap plate to insulate the curling part and the cap plate.

The cap plate may include a disk-shaped cap body and a cap rib formed by being bent from an edge of the cap body, and the first electrode current collection plate may include a current collection plate rib formed by being bent from an edge thereof.

In a state in which the first cap assembly is seated on the first electrode current collection plate, the cap rib and the current collection plate rib may be in contact with the beading part, and an end of the curling part may be in close contact with the first gasket.

In addition, an embodiment of the present invention provides a manufacturing method for a cylindrical secondary battery, the manufacturing method comprising the steps of: electrically connecting an electrode assembly and a first electrode current collection plate; accommodating the electrode assembly in a can; seating a cap plate and a first gasket of a first cap assembly on the first electrode current collection plate; after a current collection plate rib of the first electrode current collection plate and a cap rib of the cap plate are brought into contact with the inner peripheral surface of a side part of the can, beading the side part to form a beading part; after a current collection plate rib of the first electrode current collection plate and a cap rib of the cap plate are brought into contact with the inner peripheral surface of a side part of the can, forming a beading part by beading the side part; and forming a curling part by curling an end of the side part.

The cap rib and the current collection plate rib may be in contact with the beading part, and the end of the curling part may be in close contact with the first gasket.

The first electrode current collection plate may be electrically connected to the first electrode uncoated portion formed on the negative electrode plate of the electrode assembly.

### ADVANTAGEOUS EFFECTS OF DISCLOSURE

According to an embodiment of the present invention, since a welding process is not performed when assembling a cap assembly, welding development according to welding materials is not necessary, thereby reducing process investment costs and shortening a process time.

In addition, the contact area when assembling a cap assembly may increase to reduce IR, a lead tab can be eliminated to reduce the number of parts, and an accommodation space can be expanded to increase the capacity of an electrode assembly.

### BRIEF DESCRIPTION OF DRAWINGS

FIG. 1 is a cross-sectional view showing a cylindrical secondary battery according to an embodiment of the present invention.
FIG. 2A is a partial perspective view illustrating a current collector plate welding step of the cylindrical secondary battery according to FIG. 1.
FIGS. 2B and 2C are partial perspective views showing a first cap assembly assembling step of the cylindrical secondary battery according to FIG. 1.
FIG. 2D is a partial perspective view showing a beading step of the cylindrical secondary battery according to FIG. 1.
FIG. 2E is a partial perspective view showing a curling step of the cylindrical secondary battery according to FIG. 1.
FIG. 3 is an enlarged cross-sectional view of the first cap assembly after the manufacturing process according to FIG. 2E.

### MODE OF DISCLOSURE

Examples of the present invention are provided to more completely explain the present invention to those skilled in the art, and the following examples may be modified in various other forms. The present invention, however, may be embodied in many different forms and should not be construed as being limited to the example (or exemplary) embodiments set forth herein. Rather, these example embodiments are provided so that this invention will be thorough and complete and will convey the aspects and features of the present invention to those skilled in the art.

In addition, in the accompanying drawings, sizes or thicknesses of various components are exaggerated for brevity and clarity. Like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the invention. As used herein, the singular forms are intended to include the plural forms as well, unless the context clearly indicates otherwise. It will be further understood that the terms that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present invention.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the exemplary term "below" can encompass both an orientation of above and below.

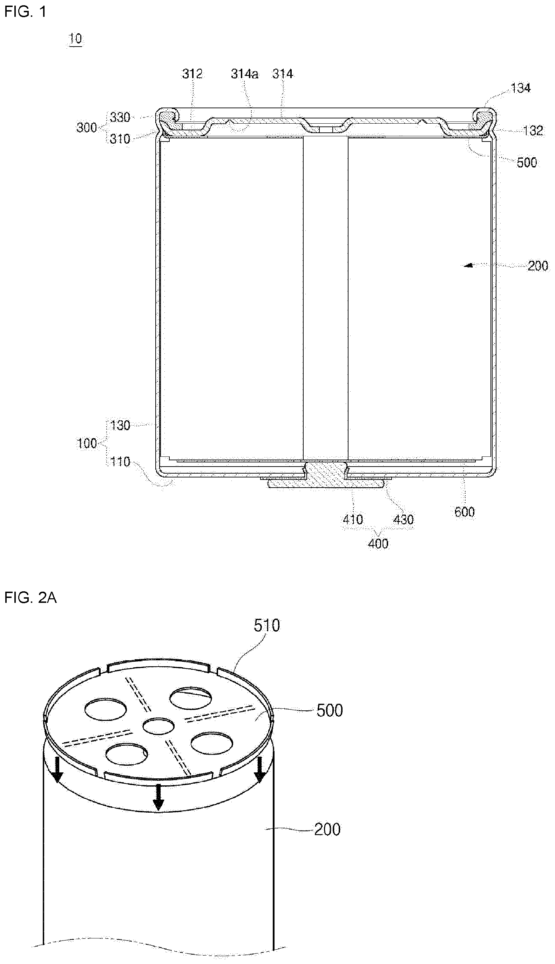

Hereinafter, a cylindrical secondary battery according to an embodiment of the present invention will be described in detail with reference to the attached drawings (for convenience, on the basis of FIG. 1, the upper part is defined as an upper portion and the lower part is defined as a lower portion).

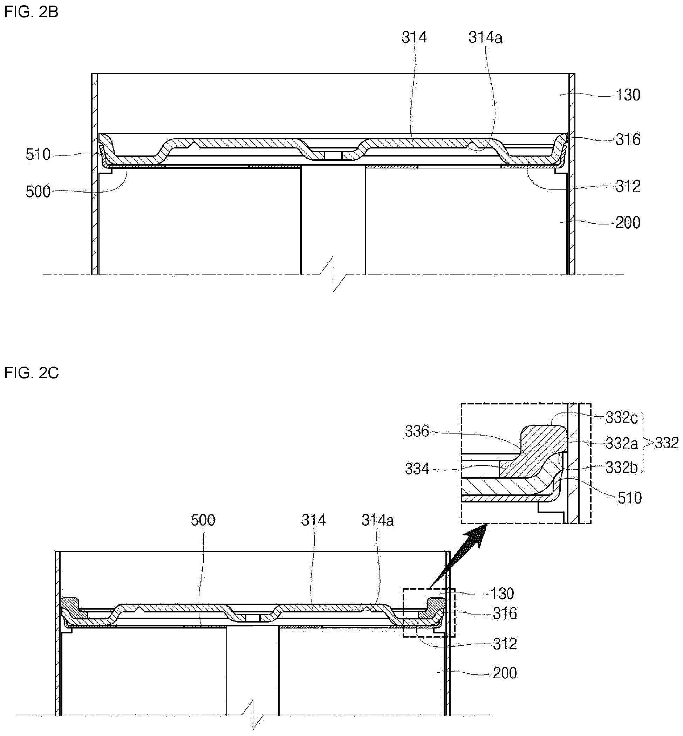

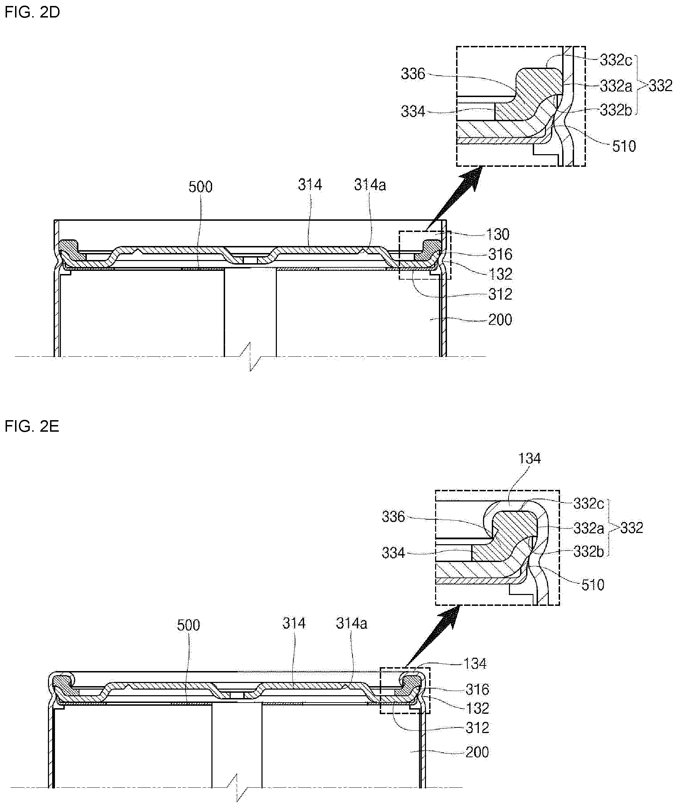

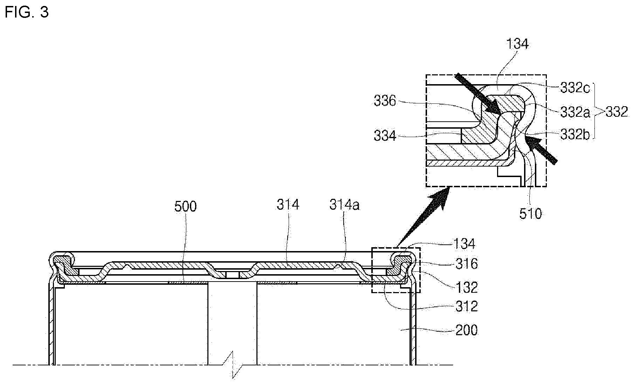

FIG. 1 is a cross-sectional view showing a cylindrical secondary battery according to an embodiment of the present invention. FIG. 2A is a partial perspective view illustrating a current collector plate welding step of the cylindrical secondary battery according to FIG. 1. FIGS. 2B and 2C are partial perspective views showing a first cap assembly assembling step of the cylindrical secondary battery according to FIG. 1. FIG. 2D is a partial perspective view showing a beading step of the cylindrical secondary battery according to FIG. 1. FIG. 2E is a partial perspective view showing a curling step of the cylindrical secondary battery according to FIG. 1. FIG. 3 is an enlarged cross-sectional view of the first cap assembly after the manufacturing process according to FIG. 2E.

As shown in FIG. 1, the cylindrical secondary battery 10 according to an embodiment of the present invention may include a cylindrical can 100, an electrode assembly 200 inserted into the can 100, a first cap assembly 300 and a second cap assembly 400 respectively coupled to both ends of the can 100, and a first electrode current collection plate 500 and a second electrode current collection plate 600 electrically connecting the electrode assembly 200 to the first cap assembly 300 and the second cap assembly 400.

The can 100 may include a circular floor part 110 and a side part 130 extending upward from the floor part 110. A through hole is formed in the floor part 110 so that the second cap assembly 400 is coupled thereto. The side part 130 is cylindrical and has an open top to form an opening. The floor part 110 and the side part 130 may be integrally formed or may be separately formed to be combined with each other. In the manufacturing process of the secondary battery 10, the electrode assembly 200 is accommodated in the can 100 along with an electrolyte through the opening, and the first cap assembly 300 is coupled to the opening to seal the can 100. The can 100 may be made of steel, a steel alloy, nickel-plated steel, a nickel-plated steel alloy, aluminum, an aluminum alloy, or equivalents thereof, but is not limited thereto.

The electrode assembly 200 may include a first electrode plate, a second electrode plate, and a separator. For example, the first electrode plate may be a negative electrode plate having a negative electrode active material layer (e.g., graphite, carbon, etc.) formed on both sides. A first electrode uncoated portion in which a negative electrode active material layer is not formed may be formed in a portion of the first electrode plate. The first electrode uncoated portion may be arranged to face the opening of the can 100. In addition, for example, the second electrode plate may be a positive electrode plate with a positive electrode active material layer (e.g., transition metal oxide (LiCoO2, LiNiO2, LiMn2O4, etc.)) formed on both sides. A second electrode uncoated portion in which a positive electrode active material layer is not formed may be formed in a portion of the second electrode plate. The second electrode uncoated portion may be arranged to face the floor part 110 of the can 100. The separator is placed between the first electrode plate and the second electrode plate to prevent short circuits and only allows the movement of lithium ions. For example, the first electrode plate may be a copper (Cu) or nickel (Ni) foil, the second electrode plate may be an aluminum (Al) foil, and the separator may be polyethylene (PE) or polypropylene (PP), but are not limited thereto. The first electrode plate, the second electrode plate, and the separator may be wound approximately in a cylindrical shape and accommodated inside the can 100. Here, the first electrode uncoated portion may be electrically connected to the first electrode current collection plate 500, and the second electrode uncoated portion may be electrically connected to the second electrode current collection plate 600.

As shown in FIG. 2A, the first electrode current collection plate 500 may be welded to the first electrode plate, which is a negative electrode plate, and may also be welded to the first cap assembly 300. Accordingly, the first electrode plate and the first cap assembly 300 may be electrically connected. The first electrode current collection plate 500 may have an approximately disk shape. In addition, the edge of the first electrode current collection plate 500 may be bent upward and extend by a predetermined length toward the first cap assembly 300 (see FIG. 2A). This extending portion may be referred to as a current collection plate rib 510 (this will be described later). The second electrode current collection plate 600 may be welded to the second electrode plate, which is a positive electrode plate, and may also be welded to the second cap assembly 400. Accordingly, the second electrode plate and the second cap assembly 400 may be electrically connected. The second electrode current collection plate 600 may have an approximately disk shape. The second electrode current collection plate 600 may be formed to have a diameter smaller than the inner diameter of the can 100 and may be installed so as not to contact the can 100. That is, the second electrode current collection plate 600 is electrically connected only to the second cap assembly 400.

As shown in FIGS. 2B to 3, the first cap assembly 300 may include a cap plate 310 and a first gasket 330.

The cap plate 310 may include a cap body 312 having a substantially disk shape, a cap protrusion 314 formed integrally with the cap body 312, a cap rib 316 formed on an edge of the cap body 312, and a rupture notch 314a formed on the cap protrusion 314. The cap protrusion 314 protrudes upward from the plate surface of the cap body 312 at a predetermined height. The cap protrusion 314 may protrude in a substantially circular shape, and a central portion thereof may protrude downward. This shape is intended to enhance the rigidity of the cap plate 310. A liquid injection hole may be formed to penetrate the downwardly protruding portion of the cap protrusion 314. In addition, in consideration of the height tolerance of the first electrode current collection plate 500, the downwardly protruding portion of the cap protrusion 314 may be spaced apart from the first electrode current collection plate 500 by a predetermined distance. When blocking the liquid injection hole after liquid injection, for example, a sealing plate may be inserted and welded or a blind rivet may be inserted and welded, and in this case, to avoid affecting the first electrode current collection plate 500 during welding, or to insert the rivet, a certain amount of space is required. To this end, the downwardly protruding portion of the cap protrusion 314 may be spaced apart from the first electrode current collection plate 500. The cap rib 316 is a portion that is upward bent from the edge of the cap body 312 and extends and is brought into contact with the side part 130 of the can 100 during the assembly process of the first cap assembly 300. The cap rib 316 may be shaped to be bent at a predetermined angle in a direction in which the outer edge faces peripheral surface of the side part 130 of the can 100. For example, the cap rib 316 may extend longer than the current collection plate rib 510 of the first electrode current collection plate 500 when assembling the first cap assembly 300. Therefore, the bent edge of the cap rib 316 may cover the current collection plate rib 510. The rupture notch 314a may be formed along the circumferential direction on the cap protrusion 314. For example, the rupture notch 314a of the cap protrusion 314 may be formed using internal forging (press), etc. on the surface facing the electrode assembly 200. When gas is generated inside the secondary battery 10 and the internal pressure exceeds a certain pressure, the rupture notch 314a may function as a vent that ruptures and discharges the gas.

The first gasket 330 has a predetermined width and may have a substantially ring shape. The first gasket 330 consists of an outer side part 130 and an inner side part 130, and a connection part 336 connecting the outer side part 130 and the inner side part 130, which may have a step. The outer side part 130 has a predetermined width and thickness, and the connection portion 336 is integrally formed therewith at the lower part of the inner edge. A side surface 332a of the outer side part 130 is in contact with the inner peripheral surface of the side part 130 of the can 100, and a bottom surface 332b of the outer side part 130 is in contact with an upper portion of the outer edge of the cap plate 310. A top surface 332c of the outer side part 130 is in contact with the curling part 134, which will be described later. However, the lower portion of the outer edge of the cap plate 310 is not covered by the outer side part 130 and is in contact with the side part 130 of the can 100. A top end of the connection part 336 is formed integrally with the outer side part 130, and the bottom end thereof is formed integrally with the upper portion of the inner side part 130. The connection part 336 may have an angle that approximately corresponds to the angle at which the cap rib 316 of the cap plate 310 is bent. However, the connection part 336 is pressed and deformed due to deformation of the can 100 and comes into close contact with the cap plate 310, and thus is not limited to the above-described bending angle. The inner side part 130 has a predetermined width and thickness, and the bottom surface thereof is in contact with the top surface of the cap body 312 of the cap plate 310. The first gasket 330 insulates the cap plate 310 and the curling part 134 of the can 100, from each other, which will be described later. However, the end of the cap rib 316 is not insulated by the first gasket 330, but is in contact with the side part 130 or a beading part 132 of the can 100 to then be electrically connected. Accordingly, the can 100 may have a negative polarity that is the same polarity as the first cap assembly 300.

As shown in FIG. 1, the second cap assembly 400 may include a rivet terminal 410 and a second gasket 430.

The rivet terminal 410 may include a terminal part 412 that has a substantially disk shape, and a terminal pillar 414 that is integrally formed with the terminal part 412 in a cylindrical shape. The terminal part 336 may be inserted into a through hole formed in the floor part 110 of the can 100, and the top end thereof may be electrically connected to the second electrode current collection plate 600 by welding, etc. Since the rivet terminal 410 is insulated from the can 100 by means of the second gasket 430, the rivet terminal 410 becomes a positive electrode terminal.

Referring again to FIGS. 2A to 3, the method for assembling the first cap assembly will now be described in more detail.

As shown in FIG. 2A, before assembling the first cap assembly 300, the first electrode current collection plate 500 is welded to the wound electrode assembly 200. A plurality of arc-shaped current collection plate ribs 510 are formed along the circumferential direction at the edge of the first electrode current collection plate 500. When the electrode assembly 200 and the first electrode current collection plate 500 are welded, the current collection plate rib 510 is arranged to face upward.

Thereafter, as shown in FIG. 2B, the electrode assembly 200 is accommodated inside the can 100. Here, the current collection plate rib 510 of the first electrode current collection plate 500 may be in contact with the inner peripheral surface of the side part 130 of the can 100. Then, the cap plate 310 is seated on the first electrode current collection plate 500. Here, a portion of the outer peripheral surface of the cap rib 316 may be in contact with the inner peripheral surface of the current collection plate rib 510 of the first electrode current collection plate 500 and the inner peripheral surface of the side part 130 of the can 100. In addition, the top end of the cap rib 316 may be in contact with the inner peripheral surface of the side part 130 of the can 100. In this state, as shown in FIG. 2C, the first gasket 330 is seated. Here, the side surface 332a of the outer side part 130 of the first gasket 330 is in contact with the inner peripheral surface of the side part 130, and the bottom surface 332b of the outer side part 130 is in contact with an upper portion of the outer edge of the cap plate 310. In addition, the connection part 336 of the first gasket 330 is in contact with the inner peripheral surface of the cap rib 316, and the inner side part 130 is in contact with the top surface of the cap body 312.

In this state, as shown in FIG. 2D, through a beading process, the side part 130 is processed so as to be concave toward the inside of the can 100. Here, the beading part 132 is formed on the side part 130 through the beading process, and the location of the beading part 132 is an area in contact with the current collection plate rib 510. For example, the beading part 132 may be formed so that a top area of the current collection plate rib 510 is brought into contact with the most inwardly convex area. Thereafter, as shown in FIG. 2E, through a curling process, the curling part 134 is formed by inwardly bending the top end of the side part 130, and the curling part 134 is brought into close contact with the connection part 336 of the first gasket 330.

Since the beading process is a process in which the side part of the can 100 is permanently deformed by applying pressure to a device, the current collection plate rib 510 is pressed toward the inside of the can 100 while the beading part 132 is formed. Accordingly, the cap rib 316 is also pushed along with the current collection plate rib 510 toward the inside of the can 100. In addition, as the curling part 134 is formed through the curling process, an end of the curling part 134 is curled toward the first gasket 330. Accordingly, the first gasket 330 is pressed and pushed toward the cap rib 316 of the cap plate 310. The direction in which the current collection plate rib 510 and the cap rib 316 are pushed according to the formation of the beading part 132, and the direction in which the cap rib 316 is pushed, are shown in FIG. 3.

As shown in FIG. 3, after the final curling process is completed, the first cap assembly 300 is configured such that the cap plate 310 is in contact with the first electrode current collection plate 500 and the side part of the can 100. Since the first electrode current collection plate 500 is electrically connected to the first electrode plate, which is a negative electrode plate, the first cap assembly 300 and the can 100 may have a negative polarity. In addition, by the beading part 132 and the curling part 134, the cap plate 310 and the first gasket 330 can be tightly fixed in the direction indicated by the arrow. In this way, a welding process can be omitted when assembling the first cap assembly 300, thereby shortening the process time. Since the welding process itself is not performed, welding development according to welding materials is not required, thereby reducing process investment costs.

While the foregoing embodiment is only one embodiment for carrying out the present invention, which is not limited to the embodiment, it will be understood by a person skilled in the art that various changes in form and details may be made therein without departing from the spirit and scope of the present invention as defined by the following claims.

## Claims

1. A cylindrical secondary battery comprising:
a can having a circular floor part, a cylindrical side part of which one end is open, a beading part formed to be adjacent to one end of the side part, and a curling part formed by curling an end portion of the side part;
an electrode assembly accommodated in the can;
a first cap assembly coupled to the open end portion of the side part;
a second cap assembly coupled to the floor part;
a first electrode current collection plate arranged between the first electrode plate and the first cap assembly; and
a second electrode current collection plate arranged between the second electrode plate and the second cap assembly,
wherein, after the first cap assembly is mounted on the first electrode current collection plate, the beading part is formed in an area that presses the outer edge of the first electrode current collection plate, in a state in which a cap plate and the outer edge of the first electrode current collection plate are in contact with the side part.

2. The cylindrical secondary battery as claimed in claim 1, wherein the first electrode plate is a negative electrode plate in which the first electrode uncoated portion is disposed toward the open end of the side part, and the second electrode plate is a positive electrode plate in which the second electrode uncoated portion is disposed toward the floor part.

3. The cylindrical secondary battery as claimed in claim 2, wherein the first cap assembly further comprises a first gasket disposed between the curling part and the cap plate to insulate the curling part and the cap plate.

4. The cylindrical secondary battery as claimed in claim 3, wherein the cap plate comprises a disk-shaped cap body and a cap rib formed by being bent from an edge of the cap body, and the first electrode current collection plate comprises a current collection plate rib formed by being bent from an edge thereof.

5. The cylindrical secondary battery as claimed in claim 4, wherein in a state in which the first cap assembly is seated on the first electrode current collection plate, the cap rib and the current collection plate rib are in contact with the beading part, and an end of the curling part is in close contact with the first gasket.

6. A manufacturing method for a cylindrical secondary battery, comprising the steps of:
electrically connecting an electrode assembly and a first electrode current collection plate;
accommodating the electrode assembly in a can;
seating a cap plate and a first gasket of a first cap assembly on the first electrode current collection plate;
after a current collection plate rib of the first electrode current collection plate and a cap rib of the cap plate are brought into contact with the inner peripheral surface of a side part of the can, forming a beading part by beading the side part; and
forming a curling part by curling an end of the side part.

7. The manufacturing method as claimed in claim 6, wherein the cap rib and the current collection plate rib is in contact with the beading part, and the end of the curling part is in close contact with the first gasket.

8. The manufacturing method as claimed in claim 6, wherein the first electrode current collection plate is electrically connected to the first electrode uncoated portion formed on the negative electrode plate of the electrode assembly.
